# EUROPEAN PATENT SPECIFICATION

(11) **EP 2 784 279 B1**
(45) Date of publication and mention of the grant of the patent: **28.09.2016**
(21) Application number: 11876356.4
(22) Date of filing: 22.11.2011
(51) Int. Cl.: F01N 3/08, F01N 3/20, F01N 11/00

(54) **EXHAUST PURIFICATION DEVICE FOR INTERNAL COMBUSTION ENGINE**
ABGASREINIGUNGSVORRICHTUNG FÜR EINEN VERBRENNUNGSMOTOR
DISPOSITIF DE PURIFICATION DE GAZ D'ÉCHAPPEMENT POUR MOTEUR À COMBUSTION INTERNE

(43) Date of publication of application: 01.10.2014
(73) Proprietor: Toyota Jidosha Kabushiki Kaisha, Toyota-shi, Aichi 471-8571 (JP)
(72) Inventor: TSUKAMOTO, Yoshihisa, Toyota-shi, Aichi 471-8571 (JP); NAKAYAMA, Shigeki, Toyota-shi, Aichi 471-8571 (JP); NISHIOKA, Hiromasa, Toyota-shi, Aichi 471-8571 (JP); OTSUKI, Hiroshi, Toyota-shi, Aichi 471-8571 (JP); MATSUO, Junichi, Toyota-shi, Aichi 471-8571 (JP); IMAI, Daichi, Toyota-shi, Aichi 471-8571 (JP); ITO, Kazuhiro, Toyota-shi, Aichi 471-8571 (JP)
(74) Representative: TBK
(86) International application number: PCT/JP2011/076922
(87) International publication number: WO 2013/076814

(56) References cited:
- DE-A1-102005 001 119
- JP-A- 2004 257 325
- JP-A- 2008 240 614

## Description

### [TECHNICAL FIELD]

The present invention relates to an exhaust gas purification apparatus for an internal combustion engine.

### [BACKGROUND ART]

In a first patent literature, there is described that a solid reducing agent is stored and then supplied to an NOx selective reduction catalyst, after being vaporized by heat of an exhaust gas.

In a second patent literature, there is described that a solid reducing agent is heated to be vaporized, and thereafter, a gaseous reducing agent thus generated is supplied to an NOx selective reduction catalyst. Further, it is also described to detect a remaining amount of the reducing agent based on a pressure of the reducing agent. Then, it is judged that the higher the pressure, the more is the remaining amount of the reducing agent, whereas the lower the pressure, the smaller is the remaining amount of the reducing agent.

However, in the case of supplying gaseous NH₃ as the reducing agent, there is a fear that a supply pipe may be corroded due to the NH₃ staying therein, etc. Then, when the supply pipe is corroded, the reducing agent will leak therefrom, and hence, early detection of pipe corrosion is desired. For example, it is possible to determine the leakage of the reducing agent based on a change in the pressure of the reducing agent generated by pressurizing or depressurizing the supply pipe. However, it is necessary to regulate the pressure by means of a pump, etc., so there is a fear of an increase in cost. In addition, there can also be considered a case where a pump or the like can not be mounted.

### [PRIOR ART REFERENCES]

### [PATENT LITERATURES]

[First Patent Literature] Japanese Patent Laid-Open Publication No. 2010-138883 [Second Patent Literature] Japanese Patent Laid-Open Publication No. 2002-155732

Further prior art can be found in document DE 10 2005 001119 A1, disclosing a method for operating an internal combustion engine including an exhaust gas treatment device arranged in an exhaust area, whereby reagent is introduced into the exhaust area before the exhaust treatment device in a direction of flow. By doing so, an adjustable reagent safety valve and a continuously dosing reagent dosing valve are arranged. The reagent dosing valve is arranged in the exhaust area, whereby the reagent is directly sprayed into the exhaust area by which the reagent pressure is detected in the reagent path. The reagent pressure is compared with at least one threshold value and, with exceeding of the threshold value, an error signal is generated.

### [SUMMARY OF THE INVENTION]

### [PROBLEMS TO BE SOLVED BY THE INVENTION]

The present invention has been made in view of the problems as referred to above, and has for its object to detect leakage of a reducing agent with a high degree of accuracy.

### [MEANS FOR SOLVING THE PROBLEMS]

In order to attain the above-mentioned object, an exhaust gas purification apparatus for an internal combustion engine according to the present invention is provided with:
an NOx selective reduction catalyst that is arranged in an exhaust passage of the internal combustion engine and selectively reduces NOx by the supply of a reducing agent;
a tank that stores said reducing agent;
a reducing agent passage that connects between the exhaust passage of said internal combustion engine and said tank; and
an injection device that is opened when the reducing agent is supplied to said exhaust passage from said reducing agent passage, and is closed when the supply of the reducing agent is stopped;
wherein a gaseous reducing agent is supplied to said exhaust passage from said reducing agent passage;
said exhaust gas purification apparatus comprising:
   a pressure detection device that is arranged at a location from said tank to said injection device, and detects a pressure of the reducing agent;
   a temperature detection device that is arranged at a location from said tank to said injection device, and detects a temperature of the reducing agent;
   a determination device that determines whether the reducing agent leaks, according to a difference between a saturated vapor pressure corresponding to the temperature of the reducing agent detected by said temperature detection device at the time when said injection device is closed, and the pressure of the reducing agent detected by said pressure detection device at the time when said injection device is closed, and
   a correction unit that performs correction in such a manner that the smaller the amount of the reducing agent in said tank, the lower becomes said saturated vapor pressure.

The reducing agent stored in the tank may be in a solid or liquid state. In addition, the reducing agent may be in a state where the reducing agent is adsorbed or stored (occluded) in an other substance (e.g., a reducing agent storage alloy, an adsorbent, an occlusion or storage material). In cases where the reducing agent is stored in the solid or liquid state, the reducing agent is caused to be vaporized before being supplied to the exhaust passage from the injection device. Moreover, in cases where the reducing agent is caused to be adsorbed or stored in the other substance, the reducing agent is caused to be released from the other substance before being supplied to the exhaust passage from the injection device. The pressure detection device or the temperature detection device can detect the pressure or the temperature in any of the tank, the reducing agent passage, and the injection device.

Here, if there is no leakage of the reducing agent and the temperature does not change at the time when the injection device is closed, the reducing agent will be in an equilibrium state after a sufficient period of time has elapsed, and the pressure in the reducing agent passage from the tank to the injection device will become constant. The pressure at this time becomes the saturated vapor pressure. Then, the saturated vapor pressure of the reducing agent is decided according to the temperature thereof. That is, by detecting the temperature of the reducing agent, the saturated vapor pressure of the reducing agent is found out, so the pressure from the tank to the injection device in the case of no leakage of the reducing agent is found out.

Then, in cases where the reducing agent leaks in any of the tank, the reducing agent passage, and the injection device, the pressure in the reducing agent passage from the tank to the injection device decreases, so that the pressure detected by the pressure detection device becomes lower than the saturated vapor pressure. Accordingly, it is possible to determine whether the reducing agent leaks, according to the difference between the saturated vapor pressure and the pressure thus detected. For example, when the difference between the saturated vapor pressure and the detected value of the pressure is equal to or greater than a threshold value, a determination may be made that the reducing agent leaks. In addition, a determination as to whether the reducing agent leaks may be made based on the ratio of the saturated vapor pressure and the detected value of the pressure.

For example, in cases where the reducing agent is caused to be absorbed in the other substance, when the amount of the reducing agent in the tank decreases, the pressure from the tank to the injection device will become low, even if there is no leakage of the reducing agent. That is, the pressure at the time of the equilibrium state becomes low. Accordingly, the pressure used as a reference for determination is caused to decrease according to such a decrease in the pressure. As a result of this, even if the amount of the reducing agent decreases, a determination as to whether the reducing agent leaks can be made in a more accurate manner.

Moreover, in the present invention, provision is further made for a heating device that heats the reducing agent stored in said storage tank,
wherein in cases where it is determined by said determination device
whether the reducing agent leaks, said heating device can make the temperature of the reducing agent higher when the amount of the reducing agent in said tank is small than when it is large.

By heating the reducing agent by means of the heating device, the temperature of the reducing agent goes up, and the pressure of the reducing agent also goes up. Here, when the amount of the reducing agent stored in the tank becomes small, the pressure of the reducing agent becomes low, so that a difference or variation in the pressure detected by the detection device is small, even if there is leakage. In that case, there will be a fear that the accuracy in the determination of the determination device may become low. In contrast to this, the pressure of the reducing agent can be made high by heating the reducing agent. As a result of this, the pressure, which becomes the reference at the time of determining leakage of the reducing agent, can be made high. Then, the difference in the pressure between when there is leakage of the reducing agent and when there is no leakage of the reducing agent becomes large, so the accuracy in the determination by the determination device can be made high. Here, note that the smaller the amount of the reducing agent, the higher may be made the temperature of the reducing agent. In addition, the temperature of the reducing agent may also be made higher in a stepwise manner as the amount of the reducing agent decreases.

Further, in the present invention, said determination device can carry out said determination, when an amount of change in the pressure of the reducing agent stored in said tank is equal to or less than a threshold value.

The threshold value referred to herein is a range in which the pressure can be said to be substantially constant. That is, the determination by the determination device is carried out when it can be said that there is no change in the pressure or the change in the pressure is almost equal to nothing. Here, when the injection device is opened to supply the reducing agent therefrom, the pressure in the reducing agent passage will falls or decreases, or pulsation in the pressure will occur. At such a time, when leakage of the reducing agent is determined based on the detected pressure, there will be a fear that determination accuracy may become low. In contrast to this, by carrying out the determination at the time when the amount of change in the pressure is equal to or less than the threshold value, it is possible to enhance the accuracy in the determination.

### [EFFECT OF THE INVENTION]

According to the present invention, leakage of the reducing agent can be detected in a more accurate manner.

### [BRIEF DESCRIPTION OF THE DRAWINGS]

[Fig. 1] is a view showing the schematic construction of an exhaust gas purification apparatus for an internal combustion engine according to a first embodiment of the present invention.
[Fig. 2] is a view showing the relation between the temperature and the pressure of a reducing agent from a storage tank to an injection valve.
[Fig. 3] is a flow chart showing a flow for determining leakage of the reducing agent according to the first embodiment.
[Fig. 4] is a view showing the relation between the temperature and the pressure of the reducing agent from the storage tank to the injection valve at the time of an equilibrium state.
[Fig. 5] is a flow chart showing a flow for determining leakage of the reducing agent when a remaining amount of the reducing agent is small.
[Fig. 6] is a view showing the relation between the temperature and the pressure of the reducing agent from the storage tank to the injection valve.
[Fig. 7] is a flow chart showing a flow for determining leakage of the reducing agent after a reference pressure is caused to rise, when the remaining amount of the reducing agent is small.
[Fig. 8] is a flow chart showing a flow for determining leakage of the reducing agent when there is no change in the pressure of the reducing agent.
[Fig. 9] is a view showing the schematic construction of an exhaust gas purification apparatus for an internal combustion engine according to a second embodiment of the present invention.

### [MODES FOR CARRYING OUT THE INVENTION]

Hereinafter, reference will be made to specific embodiments of an exhaust gas purification apparatus for an internal combustion engine according to the present invention based on the attached drawings.

### <First Embodiment>

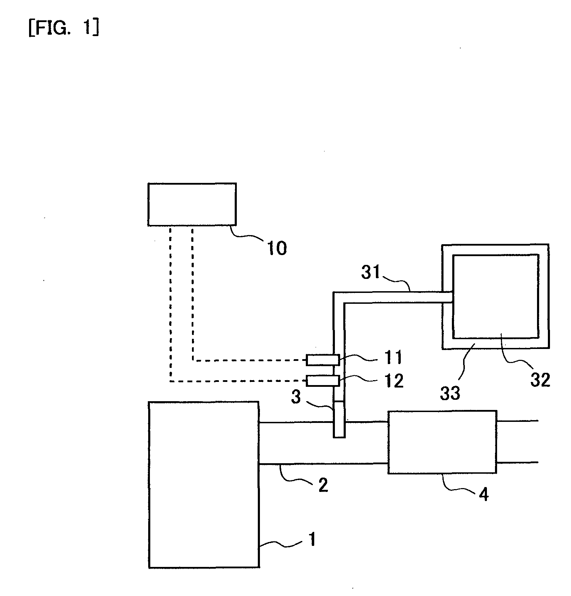

Fig. 1 is a view showing the schematic construction of an exhaust gas purification apparatus for an internal combustion engine according to this first embodiment of the present invention. An internal combustion engine 1 shown in Fig. 1 may be a diesel engine, or may be a gasoline engine.

An exhaust passage 2 is connected to the internal combustion engine 1. In the exhaust passage 2, there are arranged an injection valve 3 and a catalyst 4 in a sequential manner from an upstream side in the direction of flow of an exhaust gas.

The injection valve 3 is opened at the time of injecting a reducing agent, and is closed at the time of stopping the injection of the reducing agent. Gaseous ammonia is used for the reducing agent, for example. What will be used for the reducing agent is decided according to the kind of the catalyst 4. Then, the reducing agent carries out reactions in the catalyst 4. Here, note that in this embodiment, the injection valve 3 corresponds to an injection device in the present invention.

As the catalyst 4, there can be mentioned, for example, an NOx storage reduction catalyst, an NOx selective reduction catalyst, an oxidation catalyst, or a three-way catalyst. In addition, the catalyst 4 may be carried or supported by a particulate filter. Moreover, a particulate filter may be provided at the upstream side or at the downstream side of the catalyst 4.

A reducing agent passage 31 is connected at one end thereof to the injection valve 3. The reducing agent passage 31 is connected at the other end thereof to a storage tank 32 which serves to store the reducing agent in a solid or liquid state. Here, note that a substance (e.g., an NH₃ storage alloy, an occlusion or storage agent, an absorber, etc.), which adsorbs or stores (occludes) the reducing agent, may be provided in the storage tank 32, so that the reducing agent can be stored therein in an adsorbed or occluded state. This storage tank 32 is provided with a heater 33. By raising the temperature in the storage tank 32 by means of this heater 33, the solid or liquid reducing agent changes into gas. In addition, with the heater 33, the reducing agent can also be caused to release from the substance which has adsorbed or stored the reducing agent. Then, the gaseous reducing agent flows out into the reducing agent passage 31. Here, note that instead of raising the temperature in the storage tank 32 by means of the heater 33, the temperature in the storage tank 32 may be caused to rise by means of cooling water in the internal combustion engine 1, or the exhaust gas in the internal combustion engine 1. In addition, in this embodiment, the storage tank 32 corresponds to a tank in the present invention. Also, in this embodiment, the heater 33 corresponds to a heating device in the present invention.

In the reducing agent passage 31, there are arranged a pressure sensor 11 for detecting the pressure therein and a temperature sensor 12 for detecting the temperature thereof. The pressure sensor 11 and the temperature sensor 12 detect the pressure and temperature, respectively, of the reducing agent between the storage tank 32 and the injection valve 3. Here, note that in this embodiment, the pressure sensor 11 corresponds to a pressure detection device in the present invention. In addition, in this embodiment, the temperature sensor 12 corresponds to a temperature detection device in the present invention.

In the internal combustion engine 1 constructed as stated above, there is arranged in combination therewith an ECU 10 which is an electronic control unit for controlling the internal combustion engine 1. This ECU 10 controls the internal combustion engine 1 in accordance with the operating conditions of the internal combustion engine 1 and/ or driver's requirements.

In addition, the above-mentioned sensors are connected to the ECU 10 through electrical wiring, so that output signals of these sensors are inputted to the ECU 10. On the other hand, the injection valve 3 is connected to the ECU 10 through electrical wiring, so that the injection valve 3 is controlled by the ECU 10.

Here, note that in this embodiment, ammonia is used as the reducing agent, and the NOx selective reduction catalyst is used as the catalyst 4. In that case, the ammonia injected from the injection valve 3 adsorbs to the catalyst 4. This ammonia serves to reduce NOx in a selective manner. Then, by supplying the ammonia to the catalyst 4 or by making it to be adsorbed thereto beforehand, NOx is made to be reduced during the time when the NOx passes through the catalyst 4.

Then, the ECU 10 determines whether the reducing agent leaks to the outside at a location from the storage tank 32 and the injection valve 3. That is, it is determined whether the reducing agent leaks in any of the injection valve 3, the reducing agent passage 31 and the storage tank 32.

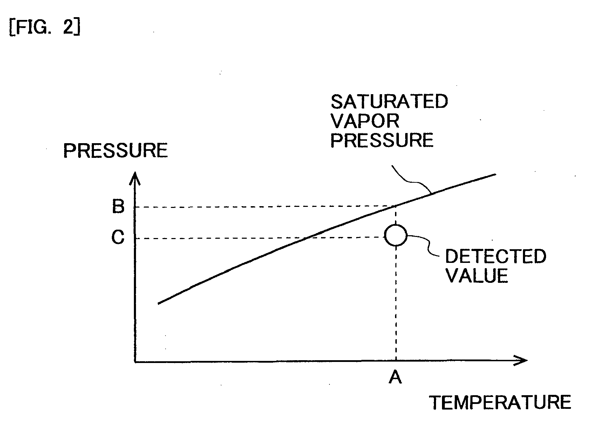

Here, Fig. 2 is a view showing the relation between the temperature and the pressure of the reducing agent from the storage tank 32 to the injection valve 3. A solid line represents a saturated vapor pressure of the reducing agent. This saturated vapor pressure may also be a pressure at the time when the liquid or solid reducing agent and the gaseous reducing agent exist at the same time and are in an equilibrium state. In addition, it may also be a pressure at the time when the reducing agent does not come in and out of the NH₃ storage alloy, the occlusion agent, or the absorber, i.e., is in an equilibrium state.

The pressure of the reducing agent at the time of said equilibrium state is decided according to the temperature of the reducing agent. Accordingly, in cases where there is no leakage of the reducing agent at the time when the temperature of the reducing agent is a value indicated by A, the pressure of the reducing agent becomes a value indicated by B. In contrast to this, in cases where there is leakage of the reducing agent, the pressure is decreased by a value equal to an amount of reducing agent which has leaked. For this reason, the pressure of the reducing agent becomes a value such as, for example, a value indicated by C which is lower than the value indicated by B.

Accordingly, in cases where the pressure of the reducing agent thus detected is lower than the saturated vapor pressure which is decided according to the temperature of the reducing agent, a determination can be made that there is leakage in the reducing agent. Here, note that when the difference (B - C) between the saturated vapor pressure and the detected value of the pressure is equal to or greater than a threshold value, a determination may be made that there is leakage in the reducing agent, by taking into consideration the influence of an error, etc. Here, the threshold value is a lower limit of values by which a determination can be made that the reducing agent leaks. In addition, the relation between the temperature and the saturated vapor pressure has been stored in the ECU 10 in advance.

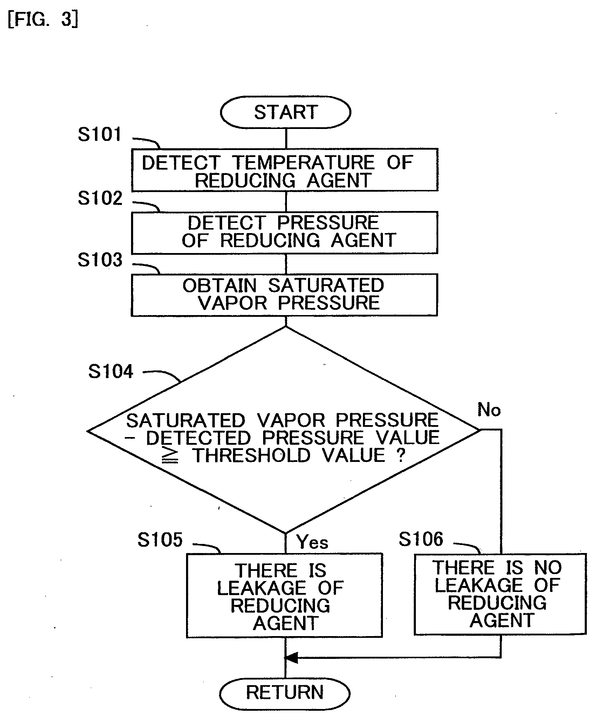

Fig. 3 is a flow chart showing a flow or routine for determining leakage of the reducing agent, according to this embodiment. This routine is carried out by means of the ECU 10 in a repeated manner at each predetermined time interval.

In step S101, the temperature of the reducing agent is detected. This temperature is detected by the temperature sensor 12. In this step, the temperature of the reducing agent is detected as a value which is in correlation with the saturated vapor pressure of the reducing agent.

In step S102, the pressure of the reducing agent is detected. This pressure is detected by the pressure sensor 11. In this step, the pressure of the reducing agent is detected as a value which is in correlation with the leakage of the reducing agent.

In step S103, the saturated vapor pressure of the reducing agent is obtained based on the temperature of the reducing agent obtained in step S101. The relation between the temperature and the saturated vapor pressure of the reducing agent has been stored in the ECU 10.

In step S104, it is determined whether the difference between the saturated vapor pressure obtained in step S103 and the pressure of the reducing agent detected in step S102 is equal to or greater than the threshold value. This threshold value has been obtained in advance through experiments, etc., as a boundary value for determining whether there is leakage in the reducing agent, and has been stored in the ECU 10.

In cases where an affirmative determination is made in step S104, the routine advances to step S105, in which a determination is made that there is leakage in the reducing agent. On the other hand, in cases where a negative determination is made in step S104, the routine advances to step S106, in which a determination is made that there is no leakage in the reducing agent. Here, note that in this embodiment, the ECU 10, which carries out the processing of step S104, corresponds to a determination device in the present invention.

In this manner, it is possible to determine, based on the difference between the saturated vapor pressure and the pressure of the reducing agent from the storage tank 32 to the injection valve 3, whether there is leakage in the reducing agent.

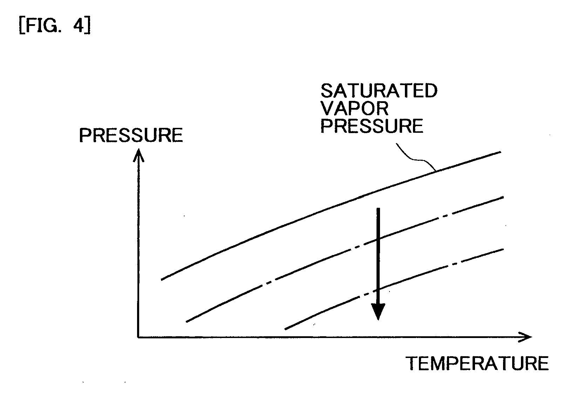

Here, depending on how to store the reducing agent in the storage tank 32, the pressure at the time of said equilibrium state becomes lower according to the decrease of the remaining amount of the reducing agent. Accordingly, when determining whether there is leakage in the reducing agent, a pressure used as a reference for determination (hereinafter, referred to as a reference pressure) is decreased in accordance with the decrease of the remaining amount of the reducing agent, as shown in Fig. 4. That is, the saturated vapor pressure is corrected.

Here, Fig. 4 is a view showing the relation between the temperature and the pressure of the reducing agent from the storage tank 32 to the injection valve 3 at the time of the equilibrium state. A solid line represents a case where an amount of storage of the reducing agent inside the storage tank 32 is sufficiently large, and an alternate long and short dash line represents a case where the amount of storage of the reducing agent inside the storage tank 32 has decreased. The reference pressure is caused to decrease in the direction of an arrow, as the amount of storage of the reducing agent in the storage tank 32 decreases.

The remaining amount of the reducing agent is obtained, for example, by subtracting an amount of the reducing agent supplied in the past from an amount of the reducing agent stored inside the storage tank 32 before the reducing agent is supplied. The amount of supply of the reducing agent is obtained, for example, by integrating an amount of the reducing agent to be supplied per unit time which can be calculated from the pressure of the reducing agent and the valve opening time of the injection valve 5.

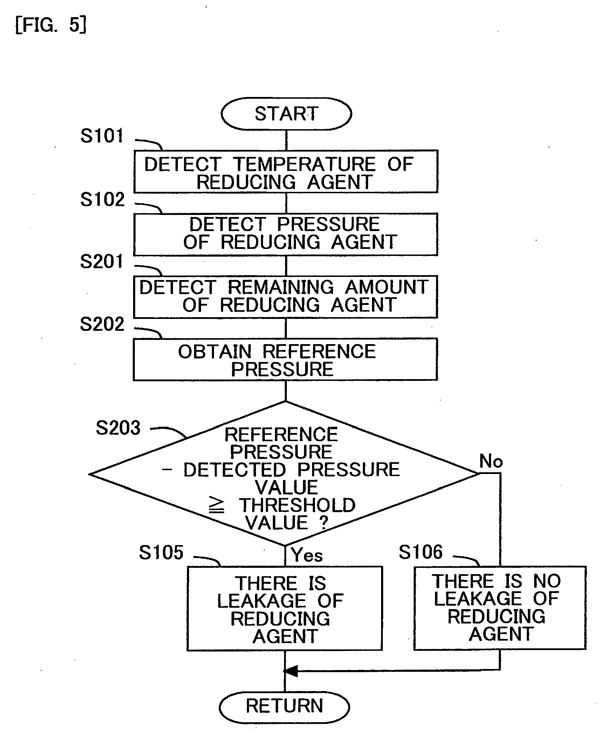

Fig. 5 is a flow chart showing a flow or routine for determining leakage of the reducing agent when the remaining amount of the reducing agent is small. This routine is carried out by means of the ECU 10 in a repeated manner at each predetermined time interval. Here, note that for those steps in which the same processing as in the above-mentioned flow is carried out, the same symbols are attached and an explanation thereof is omitted.

In step S201, the remaining amount of the reducing agent is detected. The remaining amount of the reducing agent may be detected by means of a sensor, which is mounted in an appropriate manner. In addition, it may also be calculated based on supply history of the reducing agent.

In step S202, the reference pressure is obtained based on the remaining amount of the reducing agent detected in step S201. The relation between the remaining amount of the reducing agent and the reference pressure has been obtained in advance through experiments, etc., and has been stored in the ECU 10. Here, note that in this embodiment, the ECU 10, which carries out the processing of step S202, corresponds to a correction unit in the present invention.

In step S203, it is determined whether the difference between the reference pressure obtained in step S202 and the pressure of the reducing agent obtained in step S102 is equal to or greater than a threshold value. This threshold value has been obtained in advance through experiments, etc., as a boundary value for determining whether there is leakage in the reducing agent, and has been stored in the ECU 10.

In cases where an affirmative determination is made in step S203, the routine advances to step S105, in which a determination is made that there is leakage in the reducing agent. On the other hand, in cases where a negative determination is made in step S203, the routine advances to step S106, in which a determination is made that there is no leakage in the reducing agent.

In this manner, it is possible to determine, based on the difference between the reference pressure and the pressure of the reducing agent from the storage tank 32 to the injection valve 3, whether there is leakage in the reducing agent.

As described above, when the remaining amount of the reducing agent becomes small, the pressure thereof at the time of the equilibrium state will decrease. Here, in this embodiment, in cases where the extent of decrease of the reference pressure is large, the pressure of the reducing agent may be caused to rise by raising the temperature of the reducing agent. The rise in the temperature of the reducing agent is carried out by means of the heater 33. The pressure of the reducing agent may also be caused to rise up to a pressure which has been set in advance, for example. In addition, the heater 33 may also be electrically energized only for a period of time which has been set in advance.

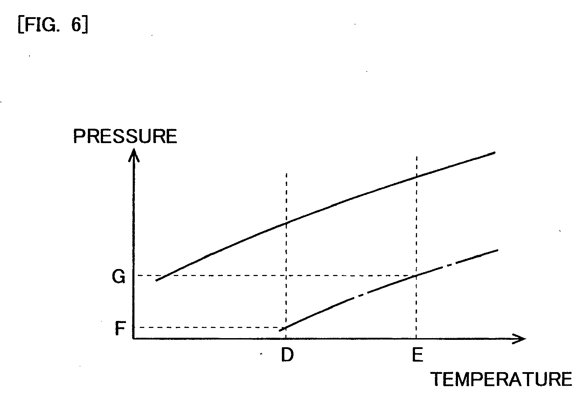

Here, Fig. 6 is a view showing the relation between the temperature and the pressure of the reducing agent from the storage tank 32 to the injection valve 3. A solid line represents a case where the amount of storage of the reducing agent inside the storage tank 32 is sufficiently large, and an alternate long and short dash line represents a case where the amount of storage of the reducing agent inside the storage tank 32 is small.

In the case of the alternate long and short dash line in Fig. 6, at a temperature indicated by D, the pressure becomes the one indicated by F and the pressure at this time is very much low. For this reason, even if there is leakage in the reducing agent, an amount of decrease in the pressure is small, and hence, such a decrease in the pressure is unclear or difficult to find out. In that case, even if it is determined, according to the pressure at this time, whether there is leakage in the reducing agent, accuracy in the determination is low. In contrast to this, the temperature of the reducing agent is caused to rise to a temperature indicated by E. According to this, the pressure of the reducing agent goes up from F to G. That is, the pressure of the reducing agent becomes high, so a decrease in the pressure at the time when there is leakage in the reducing agent becomes clear or easy to find out. With this, it is possible to enhance the accuracy in the determination as to whether there is leakage in the reducing agent.

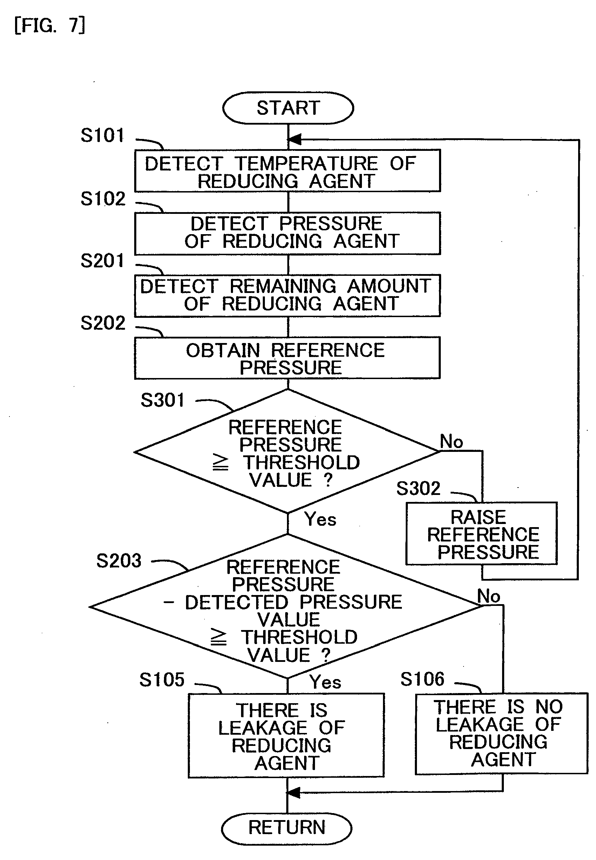

Fig. 7 is a flow chart showing a flow or routine for determining leakage of the reducing agent after the reference pressure is caused to rise, when the remaining amount of the reducing agent is small. This routine is carried out by means of the ECU 10 in a repeated manner at each predetermined time interval. Here, note that for those steps in which the same processing as in the above-mentioned flow is carried out, the same symbols are attached and an explanation thereof is omitted.

In step S301, it is determined whether the reference pressure is equal to or greater than the threshold value. The threshold value referred to herein has been obtained in advance through experiments, etc., as a value at which accuracy in the determination of whether there is leakage in the reducing agent becomes equal to or more than an allowable range or limit.

In cases where an affirmative determination is made in step S301, the routine advances to step S203, whereas in cases where a negative determination is made, the routine advances to step S302.

In step S302, the reference pressure is caused to go up. In this step, the pressure of the reducing agent is actually caused to go up by raising the temperature of the reducing agent. As a result of this, the reference pressure is raised. For example, the heater 33 is caused to operate only for the predetermined period of time. After that, the routine returns to step S101.

In this manner, the reducing agent is heated by means of the heater 33 until the reference pressure becomes equal to or greater than the threshold value. As a result, it is possible to enhance the accuracy in the determination of whether there is leakage in the reducing agent.

Here, note that by performing the determination of whether there is leakage in the reducing agent, at the time when the pressure of the reducing agent is in a stable state, the accuracy in the determination can be enhanced. For example, the determination may be made when an amount of change in the pressure of the reducing agent is equal to or less than a threshold value. This threshold value is set as a value at which the determination of leakage of the reducing agent is not affected by the influence of a change in the pressure of the reducing agent. In addition, the threshold value may be set as a value at which it can be assumed that there is no change in the pressure of the reducing agent. For example, when the remaining amount of the reducing agent is large, a change in the pressure of the reducing agent at the time of supplying the reducing agent is small, and so, it may be considered that when the remaining amount of the reducing agent is equal to or greater than the threshold value, the amount of change in the pressure of the reducing agent becomes equal to or less than the threshold value. Moreover, it can also be considered that when the internal combustion engine 1 is stopped, or when it is not necessary to supply the reducing agent to the catalyst 4, or when the reducing agent is not supplied from the injection valve 3, the pressure of the reducing agent is in a stable manner.

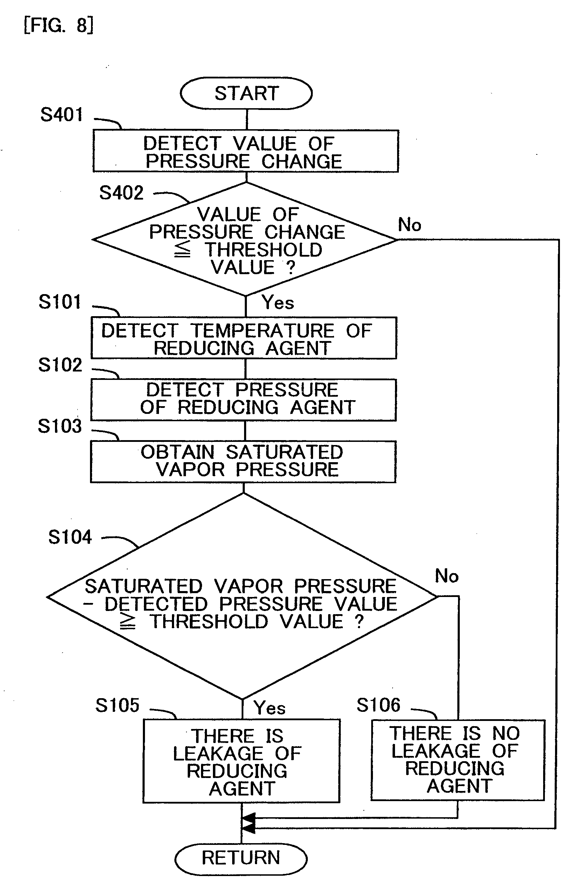

Fig. 8 is a flow chart showing a flow or routine for determining leakage of the reducing agent when there is no change in the pressure of the reducing agent. This routine is carried out by means of the ECU 10 in a repeated manner at each predetermined time interval. Here, note that for those steps in which the same processing as in the above-mentioned flow is carried out, the same symbols are attached and an explanation thereof is omitted.

In step S401, the value of a change in the pressure of the reducing agent is detected. This pressure change value is the value of a change in the pressure detected by the pressure sensor 11. For example, an amount of change or a rate of change in the pressure of the reducing agent in a predetermined period of time is detected as the pressure change value.

In step S402, it is determined whether the pressure change value detected in step S401 is equal to or less than a threshold value. The threshold value referred to herein has been obtained in advance through experiments, etc., as a value at which accuracy in the determination of whether there is leakage in the reducing agent becomes equal to or more than the allowable range or limit.

In cases where an affirmative determination is made in step S401, the routine advances to step S101, whereas in cases where a negative determination is made, this routine is ended.

As described above, according to this embodiment, it is possible to determine, according to the pressure of the reducing agent from the storage tank 32 to the injection valve 3, whether there is leakage in the reducing agent.

### <Second Embodiment>

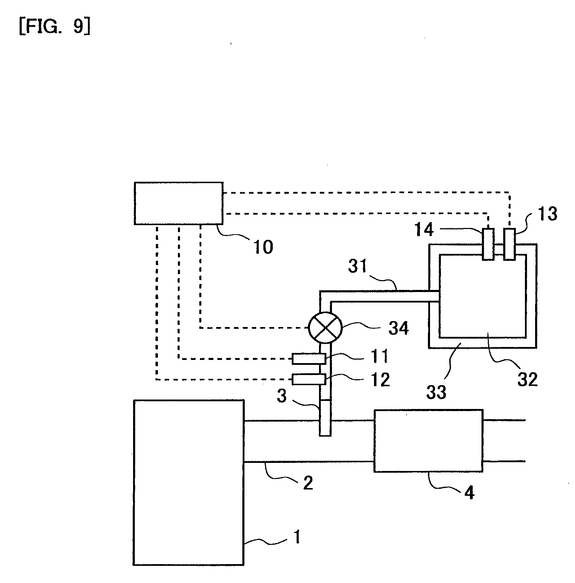

Fig. 9 is a view showing the schematic construction of an exhaust gas purification apparatus for an internal combustion engine according to this second embodiment of the present invention. Mainly, those portions which are different from Fig. 1 will be explained.

In this embodiment, in the middle of the reducing agent passage 31, there is arranged a regulating valve 34 which serves to regulate the pressure of the reducing agent. This regulating valve 34 is arranged at the side of the storage tank 32 (i.e., at the upstream side of) the pressure sensor 11 and the temperature sensor 12. The regulating valve 34 is controlled by means of the ECU 10.

In addition, a pressure sensor 13 for detecting the pressure of the reducing agent and a temperature sensor 14 for detecting the temperature of the reducing agent are mounted on the storage tank 32.

Here, the regulating valve 34 decreases the pressure of the reducing agent to a pressure which is suitable for injecting the reducing agent from the injection valve 3. That is, at the side of the storage tank 32 from the regulating valve 34, the pressure of the reducing agent will be in an equilibrium state at the saturated vapor pressure, but at the side of the injection valve 3 from the regulating valve 34, the pressure of the reducing agent will be a pressure which is regulated by the regulating valve 34. For example, the regulating valve 34 decreases the pressure by a predetermined value. In addition, the regulating valve 34 may also decrease the pressure by a predetermined ratio. Moreover, the regulating valve 34 may decrease the pressure of the reducing agent in such a manner that the pressure may become a predetermined value or may fall into a predetermined range.

Then, by using the detected values of the pressure sensor 13 and the temperature sensor 14, it can be determined whether there is leakage in the reducing agent in a path from the storage tank 32 to the regulating valve 34, similar to the first embodiment. The reference pressure at this time becomes the saturated vapor pressure.

On the other hand, whether there is leakage in the reducing agent in a path from the regulating valve 34 to the injection valve 3 is determined by the use of the detected values of the pressure sensor 11 and the temperature sensor 14. In this case, the reference pressure is made lower than that at the side of the storage tank 32 from the regulating valve 34. Here, note that the reference pressure is caused to decrease from the saturated vapor pressure by a decrease in the pressure caused at the time when the reducing agent passes through the regulating valve 34.

In this manner, by changing the reference pressure at the upstream side and at the downstream side of the regulating valve 34, it is possible to further enhance the accuracy in the determination of whether there is leakage in the reducing agent.

### [EXPLANATION OF REFERENCE NUMERALS AND CHARACTERS]

1 internal combustion engine
2 exhaust passage
3 injection valve
4 catalyst
5 injection valve
10 ECU
11 pressure sensor
12 temperature sensor
13 pressure sensor
14 temperature sensor
31 reducing agent passage
32 storage tank
33 heater
34 regulating valve

## Claims

1. An exhaust gas purification apparatus for an internal combustion engine (1) comprising:
an NOx selective reduction catalyst (4) that is arranged in an exhaust passage (2) of the internal combustion engine (1) and selectively reduces NOx by the supply of a reducing agent;
a tank (32) that stores said reducing agent;
a reducing agent passage (31) that connects between the exhaust passage (2) of said internal combustion engine (1) and said tank (32); and
an injection device (3) that is opened when the reducing agent is supplied to said exhaust passage (2) from said reducing agent passage (31), and is closed when the supply of the reducing agent is stopped;
wherein a gaseous reducing agent is supplied to said exhaust passage (2) from said reducing agent passage (31);
said exhaust gas purification apparatus comprising:
a pressure detection device (11) that is arranged at a location from said tank (32) to said injection device (3), and detects a pressure of the reducing agent;
a temperature detection device (12) that is arranged at a location from said tank (32) to said injection device (3), and detects a temperature of the reducing agent;
a determination device (10, S104) that determines whether the reducing agent leaks, according to a difference between a saturated vapor pressure corresponding to the temperature of the reducing agent detected by said temperature detection device (12) at the time when said injection device (3) is closed, and the pressure of the reducing agent detected by said pressure detection device (11) at the time when said injection device (3) is closed; and
a correction unit (10, S202) that performs correction in such a manner that the smaller the amount of the reducing agent in said tank (32), the lower becomes said saturated vapor pressure.

2. The exhaust gas purification apparatus for an internal combustion engine (1) as set forth in claim 1, further comprising:
a heating device (33) that heats the reducing agent stored in said storage tank (32);
wherein in cases where it is determined by said determination device (10, S104) whether the reducing agent leaks, said heating device (33) makes the temperature of the reducing agent higher when the amount of the reducing agent in said tank (32) is small than when it is large.

3. The exhaust gas purification apparatus for an internal combustion engine (1) as set forth in claim 1 or 2, wherein
said determination device (10, S104) carries out said determination, when an amount of change in the pressure of the reducing agent stored in said tank (32) is equal to or less than a threshold value.

## Patentansprüche

1. Abgasreinigungsvorrichtung für eine Brennkraftmaschine (1), mit
einem NOx-selektiven Reduktionskatalysator (4), der in einem Abgasdurchlass (2) der Brennkraftmaschine (1) angeordnet ist und selektiv NOx durch Zufuhr eines Reduktionsagens reduziert,
einem Tank (32), der das Reduktionsagens speichert,
einem Reduktionsagensdurchlass (31), der zwischen dem Abgasdurchlass (2) der Brennkraftmaschine (1) und dem Tank (32) verbindet, und
einem Einspritzgerät (3), das geöffnet ist, wenn das Reduktionsagens von dem Reduktionsagensdurchlass (31) zu dem Abgasdurchlass (2) zugeführt wird, und das geschlossen ist, wenn die Zufuhr des Reduktionsagens angehalten ist,
wobei ein gasförmiges Reduktionsagens von dem Reduktionsagensdurchlass (31) zu dem Abgasdurchlass (2) zugeführt wird,
wobei die Abgasreinigungsvorrichtung umfasst
ein Druckerfassungsgerät (11), das an einem Ort zwischen dem Tank (32) und dem Einspritzgerät (3) angeordnet ist und einen Druck des Reduktionsagens erfasst,
ein Temperaturerfassungsgerät (12), das an einem Ort zwischen dem Tank (32) und dem Einspritzgerät (3) angeordnet ist und eine Temperatur des Reduktionsagens erfasst,
ein Bestimmungsgerät (10, S104), das gemäß einer Differenz zwischen einem Sattdampfdruck entsprechend der Temperatur des Reduktionsagens, die durch das Temperaturerfassungsgerät (12) zu der Zeit erfasst ist, wenn das Einspritzgerät (3) geschlossen ist, und dem Druck des Reduktionsagens, der durch das Druckerfassungsgerät (11) zu der Zeit erfasst ist, wenn das Einspritzgerät (3) geschlossen ist, bestimmt, ob das Reduktionsagens austritt, und
eine Korrektureinheit (10, S202), die eine Korrektur derart durchführt, dass je kleiner das Ausmaß des Reduktionsagens in dem Tank (32) ist, desto geringer der Sattdampfdruck wird.

2. Abgasreinigungssystem für eine Brennkraftmaschine (1) nach Anspruch 1, ferner mit
einem Heizgerät (33), das das in dem Speichertank (32) gespeicherte Reduktionsagens heizt,
wobei in Fällen, in denen durch das Bestimmungsgerät (10, S104) bestimmt ist, ob das Reduktionsagens austritt, das Heizgerät (33) die Temperatur des Reduktionsagens bei kleinem Ausmaß des Reduktionsagens in dem Tank (32) höher macht, als wenn dieses groß ist.

3. Abgasreinigungsvorrichtung für eine Brennkraftmaschine (1) nach Anspruch 1 oder 2, wobei
das Bestimmungsgerät (10, S104) die Bestimmung durchführt, wenn ein Änderungsausmaß des Drucks des in dem Tank (32) gespeicherten Reduktionsagens gleich wie oder kleiner als ein Schwellwert ist.

## Revendications

1. Appareil de purification des gaz d'échappement pour un moteur à combustion interne (1) comprenant :
un catalyseur de réduction sélective de NOx (4) qui est agencé dans un passage d'échappement (2) du moteur à combustion interne (1) et réduit sélectivement les NOx par l'alimentation d'un agent de réduction ;
un réservoir (32) qui stocke ledit agent de réduction ;
un passage d'agent de réduction (31) qui se raccorde entre le passage d'échappement (2) dudit moteur à combustion interne (1) et ledit réservoir (32) ; et
un dispositif d'injection (3) qui est ouvert lorsque l'agent de réduction est amené audit passage d'échappement (2) à partir dudit passage d'agent de réduction (31) et est fermé lorsque l'alimentation de l'agent de réduction est arrêtée ;
dans lequel un agent de réduction gazeux est alimenté audit passage d'échappement (2) à partir dudit passage d'agent de réduction (31) ;
ledit appareil de purification des gaz d'échappement comprenant :
un dispositif de détection de pression (11) qui est agencé, à un emplacement dudit réservoir (32), sur ledit dispositif d'injection (3), et détecte une pression de l'agent de réduction ;
un dispositif de détection de température (12) qui est agencé à un emplacement dudit réservoir (32) audit dispositif d'injection (3), et détecte une température de l'agent de réduction ;
un dispositif de détermination (10, S104) qui détermine si l'agent de réduction fuit, selon une différence entre une pression de vapeur saturée correspondant à la température de l'agent de réduction détectée par ledit dispositif de détection de température (12) au moment où ledit dispositif d'injection (3) est fermé, et la pression de l'agent de réduction détectée par ledit dispositif de détection de pression (11) au moment où ledit dispositif d'injection (3) est fermé ; et
une unité de correction (10, S202) qui réalise la correction de sorte que plus la quantité d'agent de réduction dans ledit réservoir (32) est faible, plus ladite pression de vapeur saturée devient faible.

2. Appareil de purification des gaz d'échappement pour un moteur à combustion interne (1) selon la revendication 1, comprenant en outre :
un dispositif de chauffage (33) qui chauffe l'agent de réduction stocké dans ledit réservoir de stockage (32) ;
dans lequel, dans des cas dans lesquels on détermine, grâce audit dispositif de détermination (10, S104) si l'agent de réduction fuit, ledit dispositif de chauffage (33) fait monter la température de l'agent de réduction lorsque la quantité de l'agent de réduction dans ledit réservoir (32) est faible, plus que lorsqu'elle est importante.

3. Appareil de purification des gaz d'échappement pour un moteur à combustion interne (1) selon la revendication 1 ou 2, dans lequel
ledit dispositif de détermination (10, S104) réalise ladite détermination, lorsqu'une quantité de changement de pression de l'agent de réduction stocké dans ledit réservoir (32) est égale ou inférieure à une valeur de seuil.
